Europäisches Patentamt

European Patent Office

Office européen des brevets

(11) Numéro de publication: **0 142 427**

**B1**

(12) **FASCICULE DE BREVET EUROPEEN**

(45) Date de publication du fascicule du brevet: **18.05.88**

(21) Numéro de dépôt: **84402227.7**

(22) Date de dépôt: **06.11.84**

(51) Int. Cl.⁴: **H 04 B 9/00,** H 04 L 27/10, H 04 L 27/14

(54) Système de transmission d'informations numériques par modulation d'une onde lumineuse cohérente.

(30) Priorité: **10.11.83 FR 8317914**

(43) Date de publication de la demande:
**22.05.85 Bulletin 85/21**

(45) Mention de la délivrance du brevet:
**18.05.88 Bulletin 88/20**

(84) Etats contractants désignés:
**DE GB**

(56) Documents cités:

**ICC'83 CONFERENCE RECORD OF THE IEEE INTERNATIONAL CONFERENCE ON COMMUNICATIONS, vol. 3, Boston, Massachusetts, 19-22 juin 1983, vol. 3, pages E1.5.1 - E1.5.7, IEEE, US; V.W.S. CHAN et al.: "Heterodyne lasercom systems using GaAs lasers for ISL applications"**

**IEEE TRANSACTIONS ON AEROSPACE AND ELECTRONIC SYSTEMS, vol. AES-8, no. 1, janvier 1972, pages 51-63, New York, US; G.A. McKAY: "Noncoherent detection of split-phase FSK by multiple predetection filtering"**

(73) Titulaire: **THOMSON-CSF
173, Boulevard Haussmann
F-75379 Paris Cédex 08 (FR)**

(72) Inventeur: **de Corlieu, Guy
THOMSON-CSF SCPI 173, bld Haussmann
F-75379 Paris Cedex 08 (FR)**
Inventeur: **Robin, Léon
THOMSON-CSF SCPI 173, bld Haussmann
F-75379 Paris Cedex 08 (FR)**

(74) Mandataire: **Trocellier, Roger et al
THOMSON-CSF SCPI 19, avenue de Messine
F-75008 Paris (FR)**

(56) Documents cités:
**IEEE TRANSACTIONS ON COMMUNICATION TECHNOLOGY, vol. COM-16, no. 5, octobre 1968, pages 657-668, New York, US; M.J. FERGUSON: "Communication at low data rates - Spectral analysis receivers"**

Courier Press, Leamington Spa, England.

## Description

La présente invention concerne des systèmes de transmission d'informations numériques par modulation d'une onde lumineuse cohérente, et la réalisation de tels systèmes en utilisant une modulation du type à déplacement de fréquence. Son utilisation est plus particulièrement prévue pour des liaisons sol-air ou air-air.

De manière générale, un tel système utilise à l'émission un générateur laser pour produire une première onde lumineuse cohérente; cette onde est modulée en fréquence de part et d'autre d'une valeur moyenne $F_E$ par un modulateur recevant un signal de modulation traduisant l'information à transmettre. A la réception le système utilise un photo-mélangeur pour mélangeur l'onde reçue, avec une onde lumineuse cohérente locale, afin de fournir un signal électrique de battement à une fréquence intermédiaire. Des circuits de traitement démodulent ensuite le signal de battement.

Par ailleurs, on connaît également des techniques de transmission d'informations numériques par ondes radio-électriques. Le message peut être traduit par deux symboles; c'est le cas d'une modulation par déplacement de fréquences du type "FSK" (de l'appellation anglo-saxonne "Frequency Shift Keying"). Le message peut également être traduit en base N par une suite de symboles choisis dans un alphabet à N éléments désignés par des chiffres de 1 à N, N étant supérieur à 2. C'est le cas d'une modulation par déplacements de fréquence du type "MFSK" (Multiple Frequency Shift Keying). Chaque état à transmettre est caractérisé par une fréquence; le chiffre 1 correspond à une fréquence $F_1$, le chiffre 2 à une fréquence différence $F_2$, et ainsi de suite jusqu'au chiffre N auquel correspond une fréquence $F_N$.

Si le codage des données est de type binaire, il ne dispose que de deux symboles. C'est le cas du système "F.S.K" où P données successives sont nécessaires pour traduire le nombre $2^P-1$, par exemple six chiffres pour traduire le nombre 63 valant $2^6-1$ qui s'écrit 111111 en binaire. Dans le cas d'un codage de données où l'on dispose de N symboles, N supérieur à 2, Q données successives sont nécessaires pour traduire le nombre $N^Q-1$, par exemple en base 8 avec N=8 symboles différents, il ne faut que 2 données pour écrire le nombre 63. Un tel codage permet donc de transmettre une quantité d'information plus importantes qu'un codage binaire pour un même nombre de chiffres.

Les systèmes de transmission de données utilisant une modulation du type à déplacement de fréquence d'une onde radio-électrique non lumineuse ne permettent pas d'utiliser un grand nombre de fréquences, la fréquence de l'onde porteuse étant de l'ordre de 100 MHz. La bange de fréquences utilisable avec une onde lumineuse de plus petite longueur d'onde permet l'utilisation d'un nombre plus important de fréquences, la fréquence de l'onde porteuse étant de l'ordre de $10^7$ MHz. Or ces ondes, sont beaucoup plus rares que cells dont les fréquences sont de l'ordre de 100 MHz, les risques de brouillage sont donc beaucoup plus restreints. On peut de plus profiter de l'avantage de la haute directivité du faisceau d'ondes laser.

Un système de transmission d'informations numériques à fort débit utilisant la voie optique comme support de transmission, et un signal de modulation du type "M.F.S.K" pour traduire les informations est deja connu de l'article de V. Chan et al. dans "ICC'83 Conference Record of the IEEE International Conference on Communications, juin 1983, Vol. 3, pages E1.5.1 à E1.5.7". Le but de l'invention est de réaliser un circuit de démodulation et de détection adapté à un tel système.

Suivant l'invention on réalise un système de transmission d'informations numériques par modulation d'une onde lumineuse cohérente, comportant à l'émission un émetteur de lumière cohérente, un modulateur pour moduler ladite onde par un signal de modulation élaboré au moyen d'une pluralité N de fréquences différentes pour produire une modulation du type MSFK et traduire chaque information à transmettre sous forme numérique dans un système à base N, une optique de sortie et un générateur transformant les informations à transmettre en ledit signal de modulation, en fonction de la modulation à effectuer, le système comportant à la réception une optique d'entrée, un mélangeur hétérodyne pour créer un battement de ladite onde avec une onde lumineuse cohérente locale et obtenir un signal électrique de fréquence intermédiaire, un circuit de démodulation et de détection comportant des moyens de filtrage pour sélectionner séparément les N fréquences avant la détection pour restituer lesdites informations, caractérisé en ce que ledit circuit de démodulation et de détection comporte un circuit de synchronisation de bit fournisst un signal de synchronisation, un analyseur de spectre rapide recevant le signal intermédiaire pour l'analyser à la cadence dudit signal de synchronisation, un détecteur d'enveloppe recevant la sortie de l'analyseur, la sortie du détecteur étant connectée à l'entrée d'un nombre, égal audit nombre N de fréquences, de canaux comportant chacun une porte pilotée par un circuit de commande des portes au rhythme du signal de synchronisation, les portés étant ouvertes, chacune à l'instant où ledit analyseur produit la fréquence correspondant à ladite porte, la sortie de chacune des portes étant appliquée à l'entrée d'une mémoire correspondante qui est lue à la cadence de bit, et en ce que ledit circuit de traitement comporte un circuit de comparaison pour comparer à chaque impulsion du signal de synchronisation le contenu de toutes les mémoires pour ne garder que le signal dont l'amplitude est la plus grande.

Les particularités et avantages de l'invention seront mieux compris à la lecture de la description qui suit, donnée à titre d'exemple, et illustrée des figures qui représentent:

—Figure 1, un diagramme du système de transmission connu de l'art antérieur;

—Figure 2, un diagramme d'une réalisation connue, du circuit de démodulation et de détection;

—Figure 3, un diagramme d'une réalisation du circuit de démodulation et de détection selon l'invention;

—Figure 4A à 4I e 5, des formes d'ondes relatives au fonctionnement du circuit de démodulation selon la réalisation de la Fig. 3.

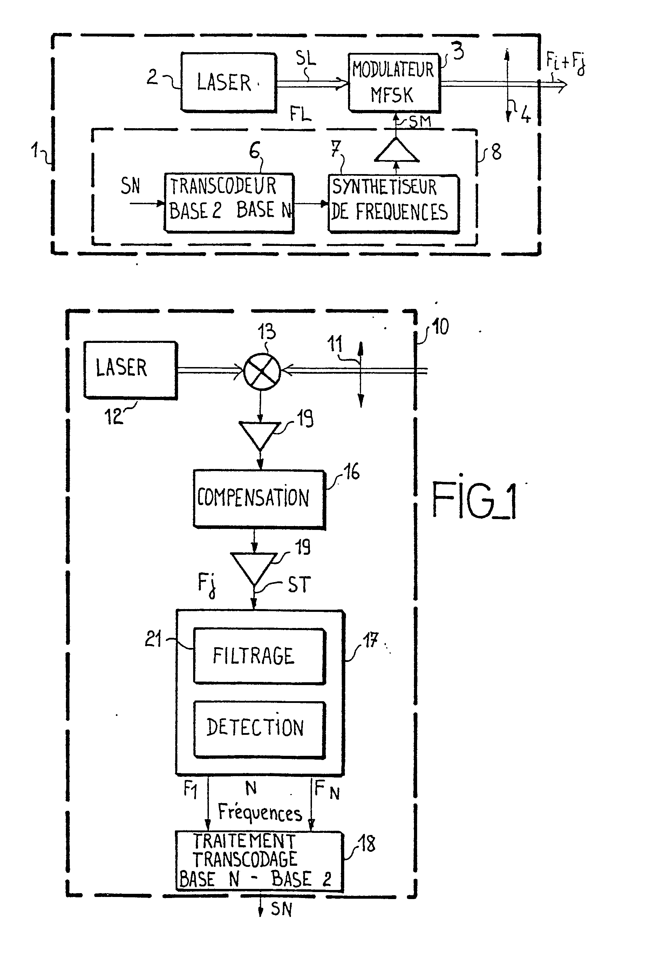

en référence à la Fig. 1, l'ensemble émetteur 1 reçoit les informations à transmettre, par exemple sous fourme de signaux viéo SV. Une source cohérente 2 telle un émetteur laser délivre une onde cohérente SL de fréquence déterminée $F_L$, et comporte à cet effet des moyens de stabilisation propres.

Un modulateur 3 reçoit l'onde laser SL et des signaux de modulation SM correspondant à un nombre déterminé N de fréquences $F_1$ à $F_N$ distinctes, pour procéder à une modulation MFSK. Le signal de sortie du modulateur est une onde lumineuse de fréquence moyenne $F_L$ formée d'impulsions successives de fréquence $F_L+F_j$, $F_j$ pouvant prendre l'une quelconque de N valeurs $F_1$ à $F_N$. Le modulateur est de préférence du type acousto-optique. L'onde modulée est transmise à un système optique de transmission approprié, par exemple une optique catadioptrique du type Cassegrain, qui forme un faisceau de divergence déterminée.

Le signal vidéo SV à transmettre est appliqué sous forme numérique à un générateur 8 du signal de modulation SM par l'intermédiaire d'un convertisseur analogique-numérique. La sortie du convertisseur est connectée à l'entrée d'un transcodeur 6. Si, le cas échéant, c'est un signal numérique SN qui est fourni à l'ensemble émetteur 1, ce signal est directement appliqué au transcodeur. Ce dernier fait correspondre au signal numérique SN, considéré sour forme binaire, un signal numérique d'un système d'écriture à base N, c'est-à-dire à N symboles différents. A chaque combinaison de P informations binaires il associe une combinaison de Q informations choisie parmi N symboles tel que $2^P=N^Q$. Par exemple si N=8 et P=6, cette combinaison de six symboles est remplacée par une de deux. La sortie du transcodeur 6 est connectée à l'entrée d'un synthétiseur de fréquences 7, qui associe à chacun des N symboles une fréquence distincte déterminée. Sa sortie délivre le signal de modulation SM prêt à être utilisé pour moduler l'onde laser SL, après avoir éventuellement traversé un ou plusieurs étages d'amplification.

L'ensemble récepteur 10 comprend en premier lieu un système optique de réception 11 dont l'axe est orienté vers l'émetteur. Une source laser 12 de même longueur d'onde que celle utilisée pour l'émission, permet de réaliser un mélange hétérodyne et de produire par un phénomène de battement un signal électrique ST à une fréquence intermédiaire. Il est réalisé au moyen d'un photomélangeur 13 tel un cristal mélangeur à large bande.

Le signal de fréquence intermédiaire est appliqué ensuite, avant démodulation, à un circuit 16 de compensation de dérive pour préserver le calage à la fréquence intermédiaire.

Le signal intermédiaire traverse un ou plusieurs étages d'amplification et est appliqué à un circuit démodulateur et détecteur 17. Ce dernier comporte des moyens de filtrage 21 pour sélectionner les N fréquences $F_1$ à $F_N$ du signal intermédiaire ST. Toutes les impulsions transmises selon une fréquence $F_j$ déterminée sont orientées sur un canal correspondant et détectées en 22, et ceci pour chacune des N fréquences. Les N canaux sont connectés à un circuit de traitement 18. Ce dernier décode le message transmis, il comprend un transcodeur qui remet le message sous forme binaire SN pour en faciliter l'exploitation.

Le circuit de traitement 18 et le circuit de compensation de dérive 30 sont maintenant décrits en même temps qu'une réalisation du démodulateur, telle que connue de l'article de G. KcKay dans "IEEE Transactions on Aerospace and Electronic Systems, Vol. AES-8, No. 1, juin. 1972, pages 51—63".

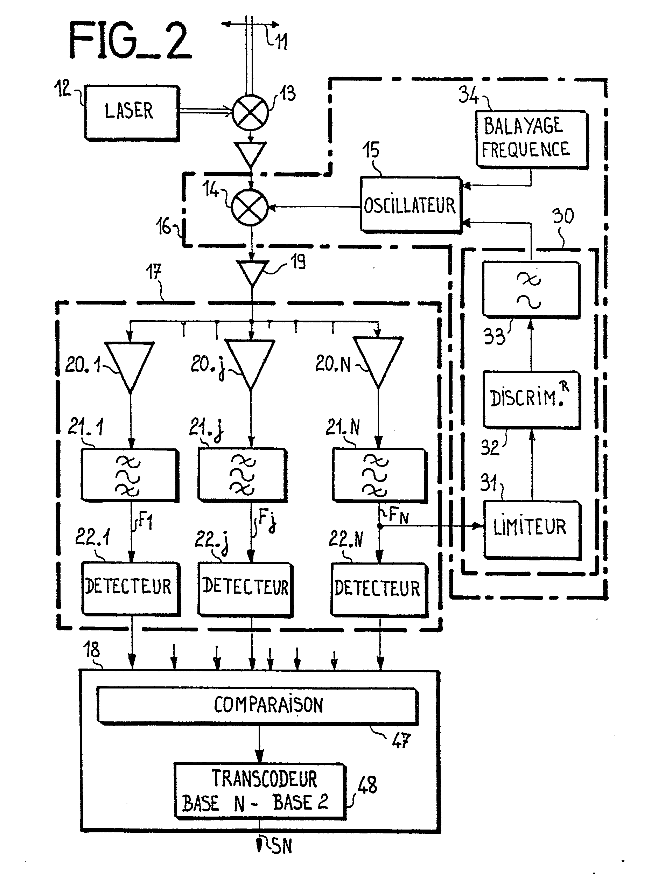

En se reportant à la figure 2, le signal intermédiaire traverse les amplificateurs à large bande 19 permettant de couvrir la plage de valeurs $F_1$ à $F_N$ (on peut considérer le milieu de cette plage comme fréquence centrale intermédiaire). Le signal est ensuite appliqué simultanément à N canaux de détection, chacun étant associé à l'une de ces fréquences $F_1$ à $F_N$. Chaque canal comprend un amplificateur d'attaque 20.1 à 20.N suivi d'un filtre passebande 21.1 à 21.N. Chacun de ces filtres ne laisse passer qu'une seule de ces fréquences utilisées pour transmettre les données, en l'occurence celle affectée à ce canal. Chaque canal est terminé par un détecteur d'enveloppe 22.1 à 22.N qui délivre un signal en présence d'impulsions ayant la fréquence caractéristique du canal. Les N sorties de ces détecteurs sont appliquées à l'entrée du circuit de traitement 18. Celui-ci lit, sur ordre de chaque impulsion de synchronisation S, le contenu de chaque mémoire, et sélectionne par un circuit de comparaison 47 la valeur d'amplitude maximale. Malgré le bruit que contient le signal de fréquence intermédiaire, la fréquence de l'impulsion de l'amplitude détectée est avec une bonne probabilité celle de l'impulsion transmise entre l'émetteur et le récepteur.

Les valeurs successivement détectées sont appliquées à l'entrée d'un transcodeur 48 qui transforme ces informations numériques "MFSK" en un signal numérique binaire, par exemple NRZ (Non Retour à Zéro). Si par exemple, le nombre de fréquences utilisées est 8, le codage des informations est fait en base 8 à l'émission. Le décodage à la réception doit se faire de base 8 en base 2. Si on dispose de 500 informations différentes susceptibles d'être transmises, on peut utiliser des mots de neuf impulsions binaires car $2^9=512<500$. En base 8 on utilisera que trois impulsions successives car $8^3=512$. Les mots ainsi formés peuvent être séparés par des instants pendant lesquels aucune impulsion n'est transmise ou au contraire, une fréquence déterminée est transmise un nombre déterminé bu fois pour distinguer le début et la fin des mots à décoder.

Le système de transmission selon l'invention est utilisé pour des liaisons entre stations qui peuvent présenter une mobilité relative entre elles. Un glissement Doppler résulte des variations de l'éloignement des deux stations. On prévoir donc de compenser ce glissement et autres dérives éventuelles au moyen du circuit de compensation 16 (Fig. 1).

Le circuit de compensation 16 n'est pas l'objet principal de l'invention mais est cependant nécessaire. Il comporte un mélangeur 14 à bande latérale unique qui reçoit également la sortie d'un oscillateur local 15 commandé par tension ou VCO (Voltage Controlled Oscillator). Il est commandé par un circuit de balayage de fréquences 34 pendant une phase préliminaire d'acquisition. Ensuite, il permet la réintégration du signal issu d'un circuit d'asservissement 30 qui compense automatiquement les dérives des lasers 2 et 12 et le glissement du signal dû à l'effet Doppler.

Le circuit d'asservissement peut être réalisé en connectant en série, à partir d'un canal, un amplificateur limiteur 31, un discriminateur de fréquence 32, et un réseau de filtrage et d'adaptation (ou intégrateur) 33 qui délivre la commande fine de calage en fréquence de l'oscillateur local 15.

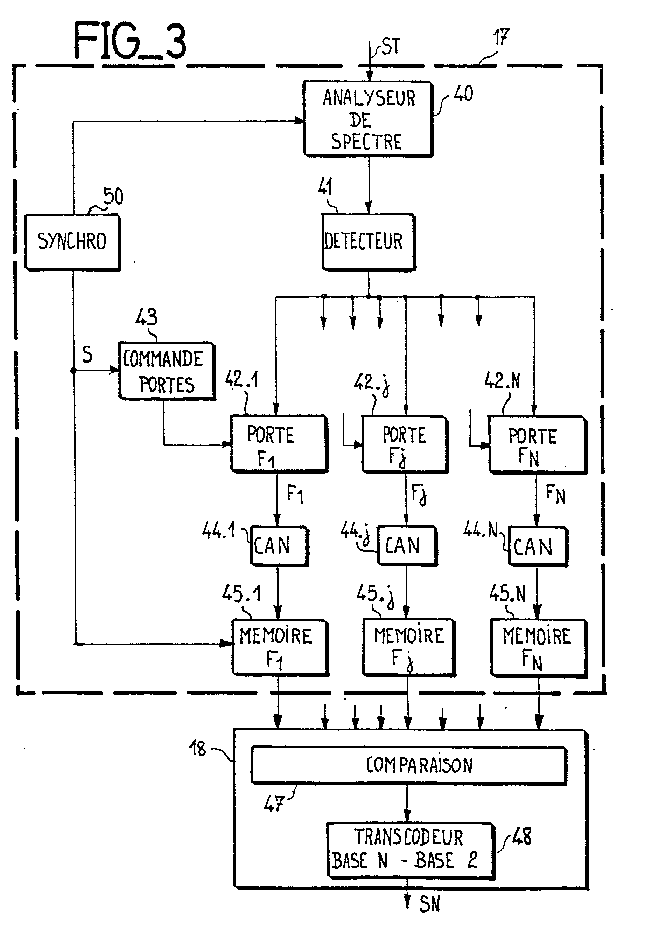

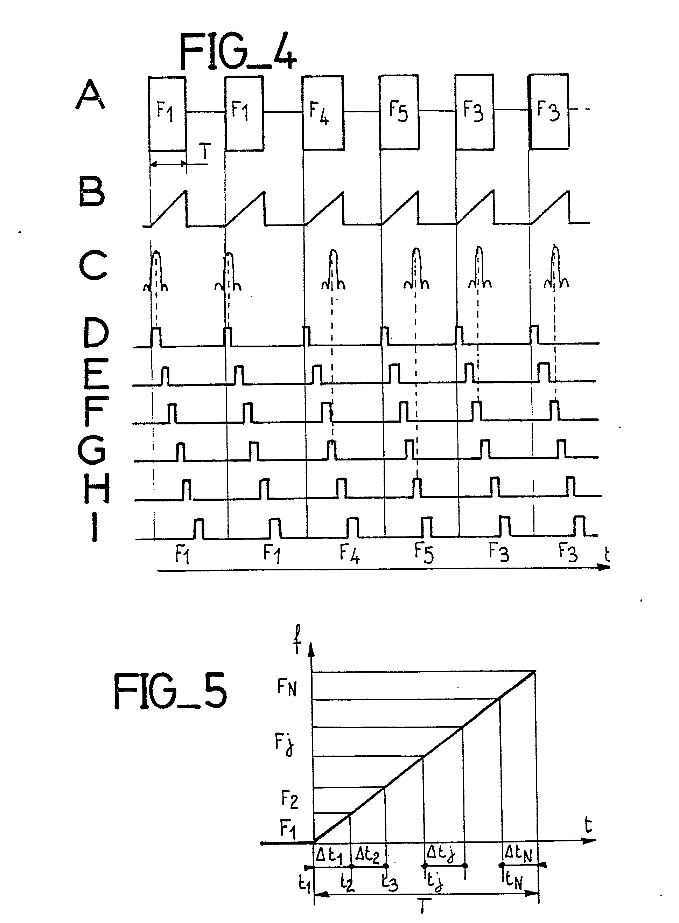

Selon l'invention la réalisation du circuit démodulateur et détecteur 17, illustrée Fig. 3, est la suivante. Aprés avoir traversé des étages d'amplification, le signal de fréquence intermédiaire ST (Fig. 4A) est appliqué à l'entrée d'un analyseur de spectre de Fourier rapide 40 qui constitue les moyens de filtrage. Cet analyseur est commandé par un circuit de synchronisation de bits 50 au rythyme des impulsions transmises et en phase avec leur réception. A chaque impulsion de synchronisation S le générateur de rampe, inclus dans l'analyseur 40, se déclenche (Fig. 4B). La sortie de l'analyseur est connectée à l'entrée d'un unique détecteur 41 d'enveloppe pour déceler la présence des différentes impulsions. La sortie du détecteur (Fig. 4C) est appliqué à N canaux correspondant chacun à une des fréquences de modulation utilisées. En considérant la forme d'onde de la Fig. 5, la rampe de l'analyseur dure une période T pendant laquelle l'analyseur scrute la plage des N fréquences. Ce balayage commence par la fréquence $F_1$ à un instant $t_1$ et se termine par la fréquence $F_N$ pendant un temps $t_N$. Chaque canal comprend une porte 41.2 à 42.N dont l'ouverture est commandée par un circuit de commande des portes 43 pendant un court intervalle de temps $\Delta t_j$ à un instant $t_j$. Ce circuit commandé peut être réalisé par des compteurs recevant un deuxième signal de synchronisation de période T/N et déclenchant chacun l'ouverture d'une porte après avoir compté un nombre déterminé de bits.

En se reportant aux Figs. 4D à 4H, ce circuit pilote les portes 42.1 à 42.N de manière décalée de sorte que chaque porte n'est ouverte que lorsque le balayage de la rampe est au niveau de la fréquence qui lui correspond. Autrement dit, si le détecteur décèle une impulsion de fréquence $F_j$, la porte qui est ouverte à cet instant précis $t_j$ est celle $42_j$ correspondant à la fréquence $F_j$ de l'impulsion. Un convertissuer analogique-numérique 44.1 à 44.N met sous forme binaire l'amplitude de l'impulsion qui est ensuite mémorisée dans une mémoire 45.1 à 45.N réservée au stockage des impulsions de fréquence correspondant à celle du canal. Le circuit de traitement 18, identique à celui décrit à la première réalisation, lit le contenu des mémoires à la cadence de bits (Fig. 41).

La mise en phase du circuit de synchronisation de bits 41 nécessite une période d'acquisition durant laquelle on émet, à titre de préambule du message, une séquence d'impulsions de même fréquence à la cadence de bit.

La bande passante du filtre 33 du circuit d'asservissement 30 doit être adaptée aux dérives possibles de la source laser locale 12 et aux variations de fréquences dues à l'effet Doppler créé par le déplacement relatif de l'ensemble émetteur par rapport à l'ensemble récepteur. Si ces variations sont importantes et rapides, la bande passant doit être assez large pour que le circuit de compensation puisse agir rapidement, et de manière précise, sans perdre le contact avec la fréquence.

La longueur d'onde choisie pour la source laser est de préférence de 10,6 microns car elle permet de disposer d'une onde lumineuse très cohérente.

## Revendications

1. Système de transmission d'informations numériques par modulation d'une onde lumineuse cohérente, comportant à l'émission un émetteur de lumière cohérente (2), un modulateur (3) pour moduler ladite onde par un signal de modulation (SM) élaboré au moyen d'une pluralité N de fréquences différentes pour produire une modulation du type MSFK et traduire chaque information à transmettre sous forme numérique dans un système à base N, une optique de sortie (4) et un générateur (8) transformant les information à transmettre en ledit signal de modulation, en fonction de la modulation à effectuer, le système comportant à la réception une optique d'entrée (11), un mélangeur hétérodyne (13) pour créer un battement de ladite onde avec une onde lumineuse cohérente locale et obtenir un signal électrique de fréquence intermédiaire, un circuit de démodulation et de détection (17) comportant des moyens de filtrage pour sélectionner séparément les N fréquences avant la détection pour restituer lesdites informations, caractérisé en ce que ledit circuit de démodulation et de détection (17) comporte un circuit de synchronisation de bit (50) fournissant un signal de synchronisation (S), un analyseur de spectre rapide (40) recevant le signal intermédiaire (ST) pour l'analyser à la cadence dudit signal de synchronisation, un détecteur d'enveloppe (41) recevant la sortie de l'analyseur, la sortie du détecteur étant connectée à l'entrée d'un nombre, égal audit nombre N de fréquences, de canaux comportant chacun une porte (42) pilotée par un circuit de commande des portes (43) au rhythme du signal de synchronisation, les portes étant ouvertes, chacune à l'instant $(t_j)$ où ledit analyseur (40) produit la fréquence $(F_j)$ correspondant à ladite porte, la sortie de chacune des portes étant appliquée à l'entrée d'une mémoire (45) correspondante qui est lue à la cadence de bit, et en ce que ledit circuit de traitement (18) comporte un circuit de comparaison (47) pour comparer à chaque impulsion du signal de synchronisation (S) le contenue de toutes les mémoires pour ne garder que le signal dont l'amplitude est la plus grande.

2. Système de transmission selon la revendication 1, caractérisé en ce qu'un circuit de compensation de dérive (16) reçoit le signal (ST) de fréquence intermédiaire et comprend un circuit d'asservissement (30) pour compenser les dérives des sources lumineuses (2, 12) en commandant un oscillateur local (15) dont le signal de sortie est mélangé audit signal de fréquence intermédiaire par un mélangeur à bande latérale (14), et comprend un circuit de balayage en fréquenc(34) pour commander ledit oscillateur pendant une phase d'acquisition.

3. Système de transmission selon la revendication 2, utilisé pour relier deux stations présentant une mobilité relative l'une par rapport à l'autre.

**Patentansprüche**

1. System zur Übertragung von digitalen Informationen durch Modulation einer kohärenten Lichtwelle, sendeseitig mit einem Kohärentlichtsender (2), einem Modulator (3) zum Modulieren der genannten Welle durch eine Modulationssignal (SM), das mittels einer Mehrzahl von N verschiedenen Frequenzen erzeugt wird, um einen Modulation vom Typ MSFK hervorzurufen und jede in digitaler Form zu übertragende Information in ein system auf der Basis N zu überführen, mit einer Ausgangsoptik (4) und einem Generator (8), welcher die zu übertragenden Informationen in das genannte Modulationssignal umformt, in Abhängigkeit von der durchzuführenden Modulation, wobei das System empfangsseitig eine Eingangsoptik (11), einen Heterodynmischer (13) zur Erzeugung einer Schwebung der genannten Welle mit einer lokalen Kohärentlichtwelle und zur Gewinnung eines elektrischen Zwischenfrequenzsignals, eine Demodulations- und Detektionsschaltung (17), welche Filtermittel zum getrennten Auswählen der N-Frequenzen vor der Detektion enthält, um die genannten Informationen wiederzugeben, dadurch gekennzeichnet, daß die genannte Demodulations- und Detektionsschaltung (17) eine Bit-Synchronisationsschaltung (50) umfaßt, die ein Scynchronisationssignal (S) liefert, einen schnellen Spektralanalysator (40) umfaßt, welcher das Zwischensignal (ST) empfängt, um es im Rhythmus des Synchronisationssignals zu analysieren, einen Hüllkurvendetektor (41) umfaßt, der das Ausgangssignal des Analysators empfängt, wobei der Ausgangs des Detektors mit dem Eingang einer Anzahl, die gleich der genannten Zahl N von Frequenzen ist, von Kanälen verbunden ist, die jeweils eine Torschaltung (42) umfassen, welche durch eine Torsteuerschaltung (43) im Rhythmus des Synchronisationssignals gesteuert wird, wobei die Torschaltungen jeweils zu einem Zeitpunkt $(t_j)$ geöffnet sind, zu welchem der Analysator (40) die der genannten Torschaltung entsprechende Frequenz $(F_j)$ erzeugt, wobei der Ausgang jeder Torschaltung an den Eingang eines entsprechenden Speichers (45) angelegt ist, der in der Bitkadenz ausgelesen wird, und daß die genannte Verarbeitungsschaltung (18) eine Komparatorschaltung (47) umfaßt, um bei jedem Impuls des Synchronisationssignals (S) den Inhalt aller Speicher zu vergleichen, um nur das Signal zu bewahren, dessen Amplitude die größte ist.

2. Übertragungssystem nach Anspruch 1, dadurch gekennzeichnet, daß eine Abdrift-Kompensationsschaltung (16) das Zwischenfrequenzsignal (ST) empfängt und eine Nachregelschaltung (30) um faßt, um die Abdriften der Lichtquellen (2, 12) zu kompensieren, indem ein Lokaloszillator (15) gesteuert wird, dessen Ausgangssignal mit dem Zwischenfrequenzsignal durch einen Seitenbandmischer (14) gemischt wird, und mit einer Frequenzdurchstimmschaltung (34) zum Steuern des genannten Oszillators während einer Erfassungsphase.

3. Übertragungssystem nach Anspruch 2, angewendet zur Verbindung von zwei Stationen, die relativ zueinander beweglich sind.

**Claims**

1. System for the transmission of digital information by modulation of a coherent light wave, the transmitter side comprising a coherent light emitter (2), a modulator (3) for modulating said wave by a modulation signal (ŞM) generated by means of a plurality of N different frequencies to produce a modulation of the type MSFK and to translate each information to be transmitted in digital shape into a N base system, an output optical unit (4) and a generator (8) transforming the information to be transmitted into said modulation signal in dependence upon the modulation to be produced, the system comprising on the receiver side an optical input unit (11), a heterodyne mixer (13) to generate a heat of said wave with a local coherent light wave and to obtain an electric intermediate frequency signal, a demodulation and detection circuit (17) comprising filtering means for selecting separately the N frequencies prior to the detection to reproduce said information, characterized in that said demodulation and detection circuit (17) comprises a bit synchronization circuit (50) supplying a synchronization signal (S), a fast spectrum analyzer (40) receiving the intermediate signal (ST) to analyze it at the rhythm of the synchronization signal, an envelope detector (41) receiving the output of the analyzer, the output of the detector being connected to the input of a number, equal to said number N of frequencies, of channels each comprising a gate (42) controlled by a gate control circuit (43) at the rhythm of the synchronization signal, each of the gates being open at the moment $(t_j)$ where the analyzer (40) produces the frequency $(F_j)$ corresponding to said gate, the output of each of the gates being connected to the input of a corresponding memory (45) which is read at the bit rhythm, and in that said processing circuit (18) comprises a comparing circuit (47) to compare at each pulse of the synchronization signal (S) the content of all of the memories to maintain only the signal of greatest amplitude.

2. Transmission system according to claim 1, characterized in that a drift compensation circuit (16) receives the intermediate frequency signal (ST) and comprises a control circuit (30) to compensate for the drifts of the light sources (2, 12) by controlling a local oscillator (15) the output signal of which is mixed to the intermediate frequency signal by a lateral band mixer (14), and comprises a frequency sweeping circuit (34) for controlling said oscillator during an acquisition phase.

3. Transmission system according to claim 2, used for connecting two stations having a relative mobility with respect to each other.

FIG_1

FIG_2

LASER · 12 · 13 · 11

BALAYAGE FREQUENCE · 34

OSCILLATEUR · 15

14 · 16

19 · 17

20.1 · 20.j · 20.N

21.1 · 21.j · 21.N

30 · 33

DISCRIM.$^R$ · 32

$F_1$ · $F_j$ · $F_N$

31 · LIMITEUR

22.1 · 22.j · 22.N

DETECTEUR · DETECTEUR · DETECTEUR

18

COMPARAISON · 47

TRANSCODEUR BASE N - BASE 2 · 48

SN

# FIG_3

ST

17

```
ANALYSEUR
DE            40
SPECTRE
```

41

```
DETECTEUR
```

50

```
SYNCHRO
```

43

S

```
COMMANDE
PORTES
```

42.1          42.j          42.N

```
PORTE        PORTE         PORTE
F1           Fj            FN
```

F1            Fj            FN

44.1          44.j          44.N

```
CAN          CAN           CAN
```

45.1          45.j          45.N

```
MEMOIRE      MEMOIRE       MEMOIRE
F1           Fj            FN
```

18

```
COMPARAISON
```

47

```
TRANSCODEUR        48
BASE N - BASE 2
```

SN

# FIG_4

# FIG_5